# EUROPÄISCHE PATENTSCHRIFT

(11) **EP 2 827 036 B1**
(45) Veröffentlichungstag und Bekanntmachung des Hinweises auf die Patenterteilung: **26.04.2017**
(21) Anmeldenummer: 14176516.4
(22) Anmeldetag: 10.07.2014
(51) Int. Cl.: F16L 17/025, F16L 37/26

(54) **Flanschanschlusssystem**
Flange connection system
Système de connexion de brides

(30) Priorität: 16.07.2013 DE 102013107525
(43) Veröffentlichungstag der Anmeldung: 21.01.2015
(73) Patentinhaber: VERITAS AG, 63571 Gelnhausen (DE)
(72) Erfinder: Keller, Uwe, 63571 Gelnhausen (DE); Hattaß, Dirk, 63584 Gründau (DE); Kari, Artur, 63762 Großostheim (DE)
(74) Vertreter: Patentship Patentanwaltsgesellschaft mbH

(56) Entgegenhaltungen:
- WO-A1-2004/067864
- FR-A- 377 449
- FR-A- 862 370
- GB-A- 1 297 218
- US-A- 779 479
- US-A- 823 346
- US-A- 2 265 268

## Beschreibung

Die vorliegende Erfindung betrifft ein Flanschanschlusssystem zum Herstellen einer Flanschverbindung für ein Fluid in einem Kraftfahrzeug.

Flanschverbindungen in Kraftfahrzeugen werden durch axiales Aufstecken oder Aufschieben von Flanschanschlussteilen in Position gebracht und montiert. Bedingt durch immer kürzer werdende Verbindungsstrecken und einen eingeschränkten Bauraum ist die Montage derartiger Flanschverbindungen in Kraftfahrzeugen aufwändig oder überhaupt nicht möglich.

In der FR 377 449 A ist ein Rohrkupplungssystem mit zwei Kupplungsteilen offenbart, wobei das Rohrkupplungssystem eine Einspritzleitung mit einer wasserführenden Leitung verbindet.

In der US 823 346 A ist ein Rohrflansch mit einem weiblichen Bereich und einem männlichen Bereich offenbart, um die Enden von gegenüberliegenden Rohren zu verbinden.

In der WO 2004/067864 A1 ist eine Schnellkupplung mit einer fixierten Rohrflansch und einer Verbindungsrohrflansch zum Verbinden einer Pumpe an eine Rohrleitung offenbart.

In der US 2,265,268 A ist ein Tank mit Kupplungen offenbart, an welche ein Steckverbinder angebracht werden kann.

In der FR 862 370 A ist ein Kupplungselement mit einem Flansch offenbart, welcher in einen Flansch eines anderen Kupplungselements gleiten kann.

In der US 779 479 A sind hohle Kupplungsglieder offenbart, deren äußere Enden ausgebildet sind, einen Schlauch oder ein Rohr aufzunehmen.

In der GB 1 297 218 A ist ein Verbinder offenbart, welcher aus zwei im Wesentlichen zylindrischen Verbindungsteilen besteht, welche mit Schlauch,- bzw. Rohrenden verbindbar sind.

Es ist die der Erfindung zugrundeliegende Aufgabe, eine druckdichte Flanschverbindung anzugeben, die in einem engen Bauraum zusammengesetzt werden kann.

Diese Aufgabe wird durch Gegenstände mit den Merkmalen nach dem unabhängigen Anspruch 1 gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Flanschanschlusssystem zum Herstellen einer Flanschverbindung für ein Fluid in einem Kraftfahrzeug, mit einem ersten Flanschanschlussteil; einem zweiten Flanschanschlussteil mit einer Aufnahme zum seitlichen Einschieben des ersten Flanschanschlussteils; einer Formdichtung zum Abdichten der Flanschverbindung zwischen dem ersten Flanschanschlussteil und dem zweiten Flanschanschlussteil; und einem Keilabschnitt zum Komprimieren der Formdichtung beim Einschieben des ersten Flanschanschlussteils in die Aufnahme des zweiten Flanschanschlussteils. Dadurch wird beispielsweise der technische Vorteil erreicht, dass Längsbewegungen beim Herstellen der Flanschverbindung unterbleiben, so dass die Flanschverbindung auch in begrenzten Bauräumen oder engen Zwischenräumen montiert werden kann. Zur Montage wird keine axiale Aufschubbewegung (Freiraum) benötigt, so dass die Flanschverbindung auch nachträglich montiert werden kann. In einer vorteilhaften Ausführungsform des Flanschanschlusssystems ist der Keilabschnitt in dem ersten Flanschanschlussteil oder dem zweiten Flanschanschlussteil gebildet. Dadurch wird beispielsweise der technische Vorteil erreicht, dass gleichzeitig mit dem Aufschieben des jeweiligen Anschlussteils eine Versetzungsbewegung erzeugt wird, die die Formdichtung komprimiert und der Aufbau des Flanschanschlusssystems vereinfacht wird.

In einer weiteren vorteilhaften Ausführungsform des Flanschanschlusssystems sind drei Keilabschnitte um eine Flanschöffnung herum angeordnet. Dadurch wird beispielsweise der technische Vorteil erreicht, dass die Flanschverbindung über eine axiale Versetzung eines Flanschanschlussteils an drei Punkten hergestellt werden kann.

In einer weiteren vorteilhaften Ausführungsform des Flanschanschlusssystems sind die drei Keilabschnitte jeweils in einem Winkel von 120° zueinander angeordnet. Dadurch wird beispielsweise der technische Vorteil erreicht, dass eine durch die Keilabschnitte ausgeübte Kraft effizient übertragen wird.

In einer weiteren vorteilhaften Ausführungsform des Flanschanschlusssystems läuft die Aufnahme im Querschnitt zumindest halbkreisförmig um die Flanschöffnung herum. Dadurch wird beispielsweise der technische Vorteil erreicht, dass ein Randbereich der Flanschverbindung abgedeckt ist und ein stabiler Rahmenbereich zum Abstützen der Keilabschnitte entsteht.

In einer weiteren vorteilhaften Ausführungsform des Flanschanschlusssystems weist das erste Flanschanschlussteil einen oder mehrere Verstärkungshaken zum Umgreifen einer Einsatzkante des zweiten Flanschanschlussteils auf. Dadurch wird beispielsweise der technische Vorteil erreicht, dass eine zusätzliche Bauteilstabilität erzielt wird.

In einer weiteren vorteilhaften Ausführungsform des Flanschanschlusssystems umfasst das zweite Flanschanschlussteil eine oder mehrere Verstärkungsrippen zum umlaufenden Verstärken der Aufnahme an einer Außenseite. Dadurch wird beispielsweise ebenfalls der technische Vorteil erreicht, dass eine zusätzliche Bauteilstabilität erzielt wird.

In einer weiteren vorteilhaften Ausführungsform des Flanschanschlusssystems weist das zweite Flanschanschlussteil eine Einsatzkante mit einer Vertiefung zum Einführen der Formdichtung auf. Dadurch wird beispielsweise der technische Vorteil erreicht, dass ein Verknicken einer Dichtung beim seitlichen Einschieben verhindert wird.

In einer weiteren vorteilhaften Ausführungsform des Flanschanschlusssystems umfasst die Formdichtung einen im Querschnitt klammer- oder c-förmigen Dichtring. Dadurch wird beispielsweise der technische Vorteil erreicht, dass der Dichtring unter Druck selbststabilisierend ist und gleichzeitig reduzierte Aufschiebkräfte erreicht werden.

Die Formdichtung umfasst einen Einpressring zum Einpressen in das erste Flanschanschlussteil. Dadurch wird beispielsweise der technische Vorteil erreicht, dass die Formdichtung verliersicher in dem Flanschanschlussteil befestigt werden kann.

In einer weiteren vorteilhaften Ausführungsform des Flanschanschlusssystems überragt der Dichtring den Einpressring seitlich. Dadurch wird beispielsweise der technische Vorteil erreicht, dass eine hohe Dichtwirkung erreicht wird.

Der Einpressring umfasst Halterippen zum Halten eines Dichtrings. Dadurch wird beispielsweise der technische Vorteil erreicht, dass ein Herausrutschen des Dichtrings aus dem Einpressring verhindert wird.

Die Halterippen sind an beiden Rändern auf der Innenseite des Einpressrings angeordnet. Dadurch wird beispielsweise der technische Vorteil erreicht, dass symmetrischer Aufbau der Formdichtung erreicht wird, so dass ein falsches Zusammensetzen des Flanschsystems verhindert wird.

In einer weiteren vorteilhaften Ausführungsform des Flanschanschlusssystems umfasst das erste Flanschanschlussteil ein Rastmittel zum Einrasten in der Aufnahme des zweiten Flanschanschlussteils. Dadurch wird beispielsweise der technische Vorteil erreicht, dass das Flanschanschlussteil auf einfache Weise eingesetzt und fixiert werden kann.

In einer weiteren vorteilhaften Ausführungsform des Flanschanschlusssystems umfasst das erste Flanschanschlussteil ein erstes Rastmittel zum Einrasten in einer Seite der Aufnahme und ein zweites Rastmittel zum Einrasten in einer gegenüberliegenden Seite der Aufnahme. Dadurch wird beispielsweise der technische Vorteil erreicht, dass das Flanschanschlussteil verdrehsicher durch die beiden Rastmittel gehalten werden kann.

In einer weiteren vorteilhaften Ausführungsform des Flanschanschlusssystems erstreckt sich zwischen dem ersten Rastmittel und dem zweiten Rastmittel ein Bügel zum Lösen der Rastverbindung. Dadurch wird beispielsweise der technische Vorteil erreicht, dass das Rastmittel zum Lösen der Flanschverbindung auf einfache Weise entriegelt werden kann.

In einer weiteren vorteilhaften Ausführungsform des Flanschanschlusssystems ist der Bügel aus Metall gebildet. Dadurch wird beispielsweise der technische Vorteil erreicht, dass eine hohe Festigkeit und Beständigkeit des Bügels erreicht wird.

In einer weiteren vorteilhaften Ausführungsform des Flanschanschlusssystems umfasst das erste Flanschanschlussteil oder das zweite Flanschanschlussteil ein in der Einschubbreite mittig angeordnetes Rastmittel. Dadurch wird beispielsweise der technische Vorteil erreicht, dass eine zuverlässige Verriegelung der Flanschverbindung erreicht wird.

In einer weiteren vorteilhaften Ausführungsform des Flanschanschlusssystems weist das erste Flanschanschlussteil eine U-Form und das zweite Flanschanschlussteil eine U-förmige Aufnahme auf. Dadurch wird beispielsweise der technische Vorteil erreicht, dass eine verdrehsichere Flanschverbindung erreicht wird.

Ausführungsbeispiele der Erfindung sind in den Zeichnungen dargestellt und werden im Folgenden näher beschrieben.

Es zeigen:
- Fig. 1: eine Explosionsansicht eines Flanschanschlusssystems;
- Fig. 2: mehrere Ansichten des zusammengesetzten Flanschanschlusssystems;
- Fig. 3: mehrere Ansichten eines ersten Flanschanschlussteils;
- Fig. 4: mehrere Ansichten eines zweiten Flanschanschlussteil;
- Fig. 5: mehrere Ansichten eines weiteren Flanschanschlusssystems;
- Fig. 6: mehrere Ansichten eines weiteren Flanschanschlusssystems; und
- Fig. 7: mehrere Ansichten eines weiteren Flanschanschlusssystems.

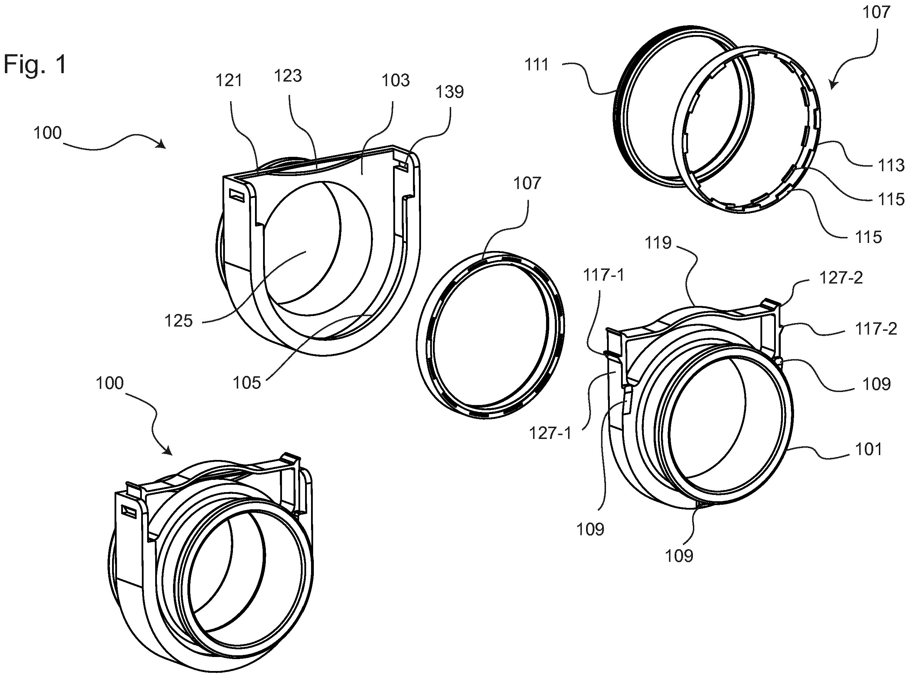

Fig. 1 zeigt eine Explosionsansicht eines Flanschanschlusssystems 100 zum Herstellen eines schiebbaren Flanschanschlusses.

Das Flanschanschlusssystem 100 dient zum Herstellen einer Flanschverbindung zwischen zwei Fluidleitungen. Die Verwendung von Flanschen ist eine Methode, Rohrabschnitte oder Luftkanäle dicht, aber lösbar miteinander zu verbinden. Mittels eines seitlich einschiebbaren Flanschanschlussteils kann beispielsweise eine Ladeluftverbindung in begrenzten Bauräumen realisiert werden. Eine derartige Flanschverbindung kann beispielsweise in Vierzylinder-Twin-Charger-Motoren verwendet werden. Dadurch wird dem begrenzten Bauraum in diesen Motoren Rechnung getragen und ein seitlicher Verbau der Flanschverbindung ermöglicht. Die Dichtheit wird durch den Anpressdruck der kreisringförmigen Verbindungsflächen auf die dazwischen liegende Formdichtung 107 erreicht.

Das Flanschanschlusssystem 100 umfasst ein erstes Flanschanschlussteil 101, ein zweites Flanschanschlussteil 103 mit einer Aufnahme 105 zum seitlichen Einschieben des ersten Flanschanschlussteils 101 und eine Formdichtung 107 zum Abdichten der Flanschverbindung zwischen dem ersten Flanschanschlussteil 101 und dem zweiten Flanschanschlussteil 103.

Das erste Flanschanschlussteil 101 umfasst mehrere Keilabschnitte 109. Die Keilabschnitte 109 verschieben das Flanschanschlussteil 101 in Wechselwirkung mit der Aufnahme 105 in axialer Richtung beim Zusammenschieben der beiden Flanschanschlussteile 101 und 103. Dadurch wird der Zwischenraum zwischen den beiden Flanschanschlussteilen 101 und 103 verringert und die eingesetzte Formdichtung 107 komprimiert, so dass eine dichte Fluidverbindung zwischen beiden Flanschanschlussteilen 101 und 103 entsteht.

Zur Fixierung in der Aufnahme 105 umfasst das erste Flanschanschlussteil 101 zwei seitlich angeordnete parallele Rastarme 127-1 und 127-2 mit einer Rastnase als Rastmittel 117-1 und 117-2. Die Rastarme 127-1 und 127-2 sind ein integraler Abschnitt des Flanschanschlussteils 101 und tangential gegenüber der Flanschöffnung 125 angeordnet. Beim Einsetzen des Flanschanschlussteils 101 in die Aufnahme 105 geben die Rastarme 127-1 und 127-2 nach, so dass die Rastnasen in entsprechende Rastöffnungen 139 einschnappen. Die beiden Rastarme sind mit einem Bügel 119 verbunden. Die Formdichtung 107 wird in eine entsprechende ringförmige Ausnehmung in dem ersten Formanschlussteil 101 eingesetzt.

Das zweite Flanschanschlussteil 103 umfasst die Aufnahme 105, die eine kreisförmige Flanschöffnung 125 u-förmig umgibt und im Querschnitt ein L-Profil aufweist. Die Aufnahme 105 bildet einen Rahmenabschnitt, in den das erste Flanschanschlussteil 101 in der Darstellung von oben eingesetzt wird. Um ein Verknicken der Formdichtung 107 beim Aufschieben zu verhindern, ist an einer Einsatzkante 121 eine Vertiefung 123 gebildet. In diesem Bereich findet keine Berührung der Formdichtung 107 mit dem zweiten Flanschanschlussteil 103 statt. Die Vertiefung 123 erleichtert ein Aufschieben des ersten Flanschanschlussteils 101.

Das erste und das zweite Flanschanschlussteil 101 und 103 sind beispielsweise Spritzgussformteile, die aus Polyamid PA, Polyphthalamid PPA oder Polyphenylensulfid PPS gebildet sind. Daneben können das erste und das zweite Flanschanschlussteil 101 und 103 auch aus Metall gebildet sein.

Die Formdichtung 107 umfasst einen Dichtring 111 und einen Einpressring 113. Der Dichtring 111 ist in den Einpressring 113 eingesetzt. Der Einpressring 113 umgibt den Dichtring 111 und dient zum verliersicheren Einsetzen der Formdichtung 107 in das erste Flanschanschlussteil 101. Der Einpressring 113 wird dazu beispielsweise in eine Aussparung in dem ersten Flanschanschlussteil 101 eingepresst, eingeklebt oder eingeschweißt. Der Einpressring 113 ist beispielsweise aus einem Material mit guten Gleiteigenschaften gebildet, wie beispielsweise Teflon oder gleitreibungsoptimiertes Polyamid PA (z. B. PA66-PTFE).

Um den Dichtring 111 in auf der Innenseite des Einpressringes 113 in Position zu halten, umfasst der Einpressring 113 auf der Innenseite Halterippen 115. Die Halterippen 115 sind abwechselnd an beiden Rändern auf der Innenseite des Einpressrings 113 sternförmig angeordnet. An der Außenseite umfasst der Dichtring 111 umlaufende Rillen, die eine Haftung im Inneren des Einpressrings 113 erhöhen. Der Dichtring 111 überragt den Einpressring 113 seitlich.

Die Formdichtung 107 ist an beiden Seiten identisch aufgebaut, so dass ein falsches Einsetzen in das erste Flanschanschlussteil 101 verhindert wird. Um das Vorhandensein des Dichtringes 111 in dem Einpressring 113 auf einfache Weise überprüfen zu können, bietet es sich an, dass der Dichtring 111 und der Einpressring 113 eine andere Farbe aufweisen.

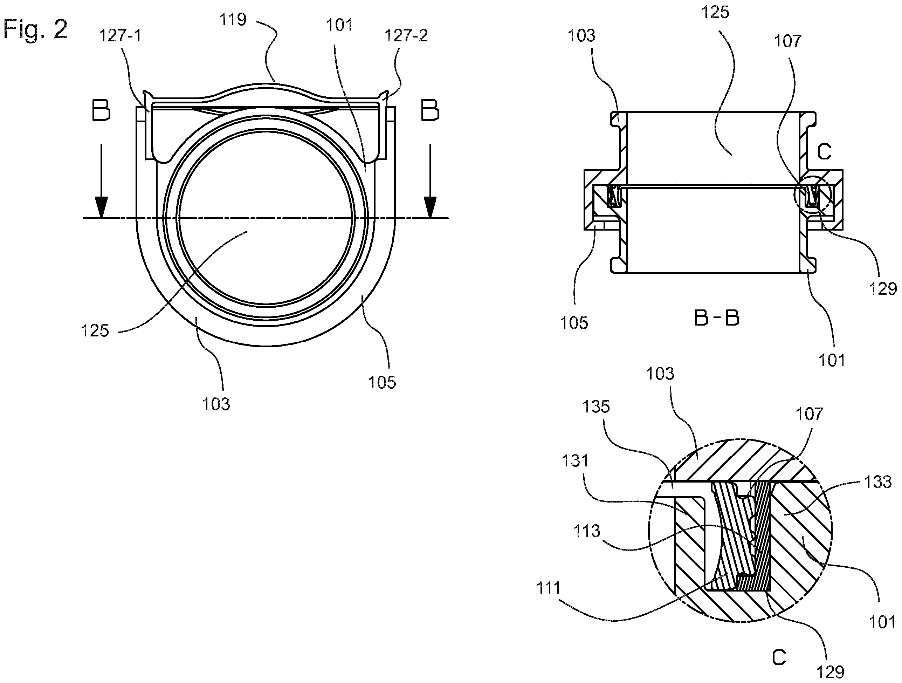

Fig. 2 zeigt mehrere Ansichten des zusammengesetzten Flanschanschlusssystems 100. Der elastische Bügel 119 verbindet die beiden elastischen Rastarme 127-1 und 127-2. Beim Herausziehen des ersten Flanschanschlussteils 101 mittels des Bügels 119, biegen sich die beiden Rastarme 127-1 und 127-2 nach innen, so dass die an diesen angeordneten Rastnasen 117-1 und 117-2 aus den jeweiligen Rastöffnungen 139 gezogen werden. Die Flanschverbindung ist dadurch vorn vorne lösbar.

Die Formdichtung 107 ist zwischen dem ersten und dem zweiten Flanschanschlussteil 101 und 103 eingesetzt. Zu diesem Zweck umfasst das erste Flanschanschlussteil 101 in der Verbindungsfläche eine in Querschnitt rechteckförmige Aussparung 129, die kreisförmig um die Flanschöffnung 125 herumläuft. Ein innen liegender Halteabschnitt 131 der rechteckförmigen Aussparung 129 weist eine geringere Höhe als ein außen gelegener Halteabschnitt 133 der rechteckförmigen Aussparung 129 auf. Durch den so entstehenden Spalt 135 zwischen dem ersten und dem zweiten Flanschanschlussteil 101 und 103 wird der im Inneren der Flanschverbindung vorliegende Druck des Fluids auf die Formdichtung 107 übertragen.

Der Dichtring 111 weist ein im Querschnitt bogen-, klammer- oder C-förmiges Profil auf, dessen Seitenbereiche an der Oberfläche des ersten Flanschanschlussteils 101 und des zweiten Flanschanschlussteil 103 aufliegen. Dadurch entsteht eine axial dichtende Flanschverbindung, bei der der Dichtring 111 der Formdichtung 107 an die umliegenden Wände gedrückt wird, so dass eine unter Druck selbststabilisierende Dichtung erreicht wird. Beim Aufschieben des ersten Flanschanschlussteils 101 auf das zweite Flanschanschlussteils 103 wird der Dichtring 111 an der Verbindungsfläche der Flanschverbindung in Position geschoben und schließlich durch die Keilabschnitte 109 komprimiert.

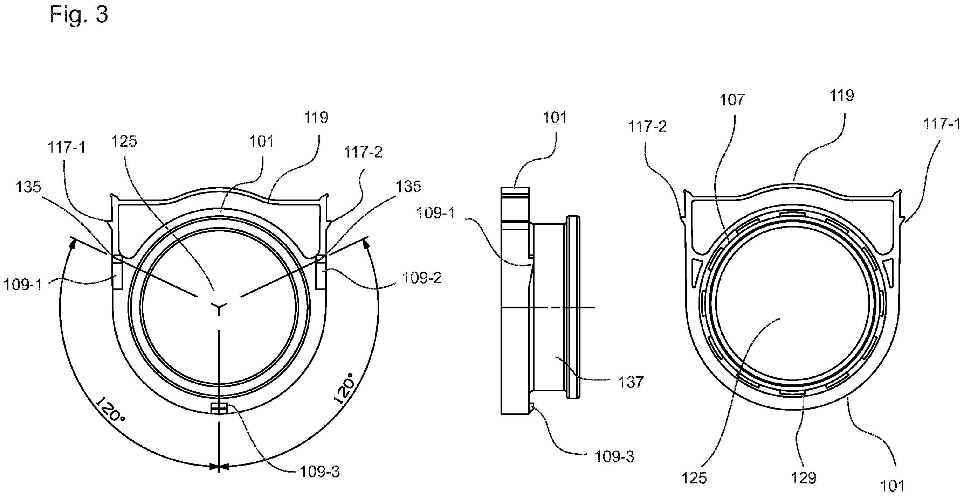

Fig. 3 zeigt mehrere Ansichten eines ersten Flanschanschlussteils 101. Das Flanschanschlussteil 101 wird über eine speziell konstruierte Einbaumimik definiert in das das zweite Flanschanschlussteils 103 als Gegenstück platziert und durch Einrasten über einem Formschluss festgehalten.

Die Keilabschnitte 109-1, 109-2 und 109-3 des ersten Flanschanschlussteils 101 sind um die Flanschöffnung 125 herum jeweils in einem Winkel von 120° zueinander angeordnet. Die Keilabschnitte 109-1, 109-2 und 109-3 sind dabei derart angeordnet, dass diese beim Einschieben des ersten Flanschanschlussteils 101 die im Querschnitt L-förmige Aufnahme 105 des zweiten Flanschanschlussteils 103 untergreifen. Der Rand der L-förmigen Aufnahme 105 gleitet über die Keilabschnitte 109-1, 109-2 und 109-3, so dass das erste Flanschanschlussteil 101 in axialer Richtung versetzt wird. Dadurch wird mittels der Keilabschnitte 109-1, 109-2 und 109-3 ein Anpressdruck auf die Formdichtung 107 ausgeübt. Am Ende der Keilabschnitte 109-1, 109-2 und 109-3 ist jeweils eine Auflagefläche 135 gebildet, auf der die L-förmige Aufnahme 105 der zweiten Flanschanschlussteils 103 im zusammengesetzten Zustand aufliegt.

Im Allgemeinen ist es jedoch auch möglich, die Kailabschnitte 109-1, 109-2 und 109-3 auf dem zweiten Flanschanschlussteil 103 vorzusehen und das erste Flanschanschlussteil 101 derart zu gestalten, dass dieses beim Einsetzen über die Keilabschnitte gleitet und dabei in axialer Richtung versetzt wird. Insbesondere kann statt der einer umlaufenden Aufnahme 105 auch eine Aufnahme verwendet werden, die aus einzelnen Klammerabschnitten gebildet ist, die aus dem zweiten Flanschanschlussteil 103 herausstehen.

Das erste Flanschanschlussteil 101 umfasst einen rotationssymmetrischen Anschlussstutzen 137 zur weiteren Verbindung des ersten Flanschanschlussteils 101. An dem Anschlussstutzen 137 können verschiedene Formschläuche, Kunststoffrohre oder andere Leitungen als Stutzenverbindung angebunden werden.

Die im Querschnitt U-förmige oder rechteckförmige Aussparung 129 läuft kreisförmig um die Flanschöffnung 125 im Bereich der Verbindungsfläche herum. Um ein Einsetzen des Flanschanschlussteils 101 zu erleichtern, kann die Verbindungsfläche plangefräst sein.

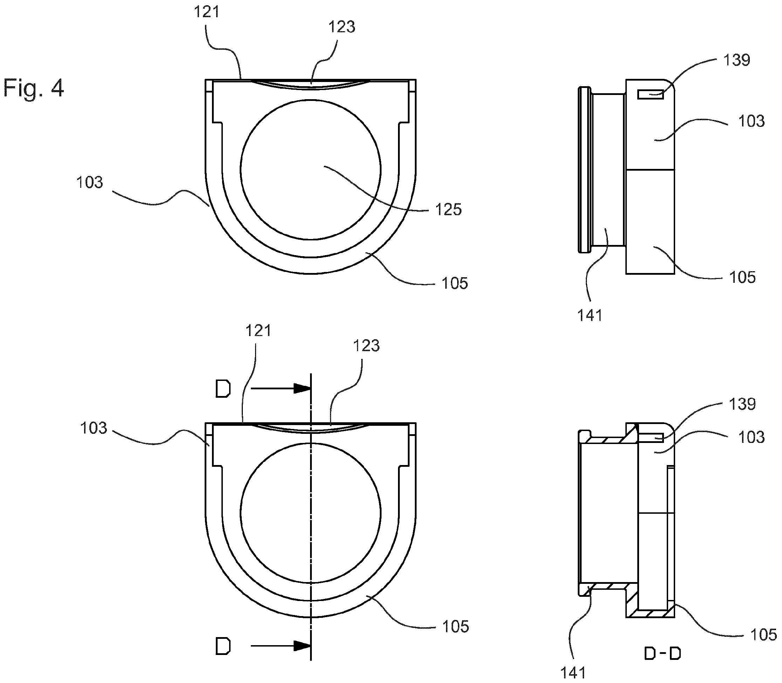

Fig. 4 zeigt mehrere Ansichten eines zweiten Flanschanschlussteils 103. Das zweite Flanschanschlussteil 103 umfasst die im Querschnitt L-förmige Aufnahme 105, die die Flanschöffnung 125 U-Förmig umgibt, so dass von oben das erste Flanschanschlussteil 101 eingesetzt werden kann. Der Rand des L-Förmigen Profils der Aufnahme 105 umgreift das eingesetzte erste Flanschanschlussstück 101 und dient als Anschlagskante für die Keilabschnitte 109-1, 109-2 und 109-3. An der offenen Einsetzkante 121 ist die bogenförmige Abflachung oder Vertiefung 123 gebildet.

In den beiden Schenkeln der U-Förmigen Aufnahme 105 sind Rastausnehmungen 139 gebildet, in denen die Rastnasen der Rastarme 127-1 und 127-2 einsetzt sind. Durch die beiderseitige Verrastung kann eine Drehung oder Rotation des ersten Flanschanschlussteils 101 in der Aufnahme 105 verhindert werden. Um ein Einsetzen des Flanschanschlussteils 101 zu erleichtern, kann die Verbindungsfläche des zweiten Flanschanschlussteils 103 ebenfalls plangefräst sein.

Das zweite Flanschanschlussteil 103 umfasst ebenfalls einen rotationssymmetrischen Anschlussstutzen 141 zur weiteren Verbindung des zweiten Flanschanschlussteils 103. An dem Anschlussstutzen 141 können ebenfalls verschiedene Formschläuche, Kunststoffrohre oder andere Leitungen als Stutzenverbindung angebunden werden.

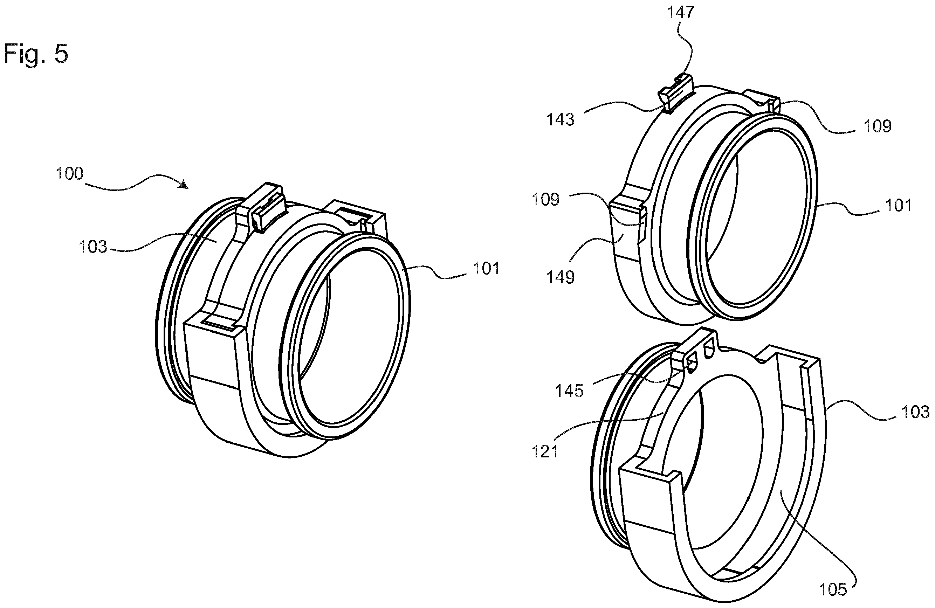

Fig. 5 zeigt mehrere Ansichten eines weiteren Flanschanschlusssystems 100. Das Flanschanschlusssystem 100 umfasst ebenfalls ein erstes Flanschanschlussteil 101 mit Keilabschnitten 109 und ein zweites Flanschanschlussteil 103 mit einer Aufnahme 105.

Das erste Flanschanschlussteil 101 umfasst einen einzigen, in der Einschubbreite mittig angeordneten Rastarm 143 mit zwei Rastnasen 147, die in gegenseitigem Abstand zueinander angeordnet sind. Demgegenüber umfasst das zweite Flanschanschlussteil 103 zwei mittig an der Einsatzkante 121 gelegene Rastöffnungen 145. Beim Einsetzen des ersten Flanschanschlussteils 101 in die Aufnahme 105 wird der Rastarm 143 nach hinten gebogen, so dass die Rastnasen 147 in die Rastöffnungen 145 einschnappen und die Flanschverbindung verriegeln. Dadurch kann eine schnelle und zuverlässige Befestigung des ersten Flanschanschlussteils 101 in der Aufnahme 105 erreicht werden

Seitlich an dem ersten Flanschanschlussteil 101 sind als zusätzliche Verdrehsicherung zwei Vorsprünge 149 gebildet, die seitlich aus der kreisförmigen Grundform herausragen und das erste Flanschanschlussteil 101 in der Aufnahme 105 abstützen. Durch die Vorsprünge 149 wird ein der Aufnahme 105 entsprechendes U-Profil erzeugt. Die seitlichen Vorsprünge 149 dienen zudem als Träger für die Keilabschnitte 109.

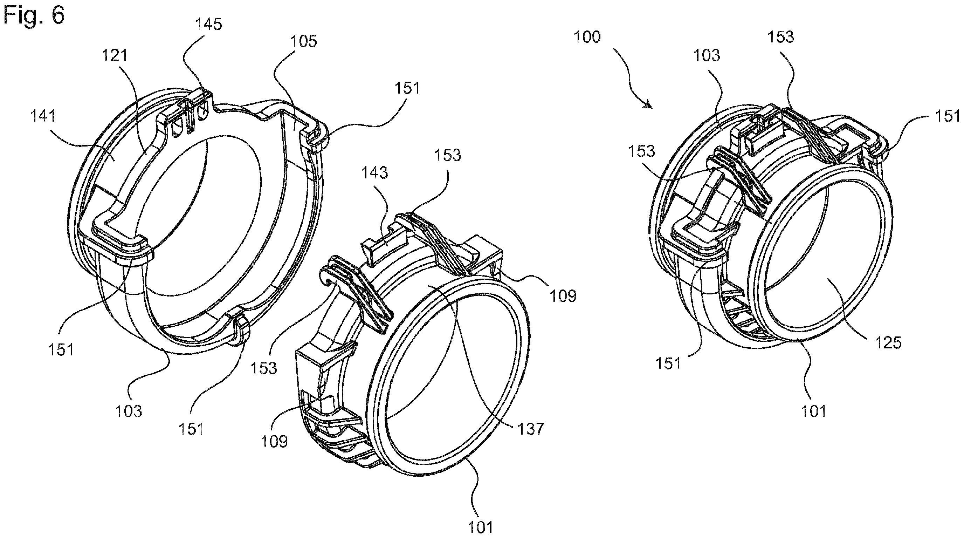

Fig. 6 zeigt mehrere Ansichten eines weiteren Flanschanschlusssystems 100. Das Flanschanschlusssystem 100 umfasst ebenfalls das Flanschanschlussteil 101 und das Flanschanschlussteil 103. Das Flanschanschlussteil 101 wird seitlich in die u-förmige Aufnahme 105 des Flanschanschlussteils 103 eingeschoben.

Der Wandabschnitt der Aufnahme 105 des Flanschanschlussteils 103 ist an der Außenseite durch drei übergreifende Verstärkungsrippen 151 verstärkt. Die Verstärkungsrippen 151 übertragen eine Kraft auf den Wandabschnitt der Aufnahme 105 auf den Anschlussstutzen 141. Die Verstärkungsrippen 151 umlaufen den Wandabschnitt der Aufnahme 105 in Verbindungsrichtung. Dadurch kann im Bereich der drei Haltepunkte eine Bauteilversteifung erzielt werden. Diese Bauteilversteifung ist insbesondere bei hohen Systemdrücken von größer als 2,5 bar oder bei Verwendung von nichtmetallischen Bauteilwerkstoffen, wie beispielsweise Kunststoffen, vorteilhaft.

Das Flanschanschlussteil 101 weist zwei zusätzliche Verstärkungshaken 153 auf, die parallel auf der Einschubseite angeordnet sind. Die Verstärkungshaken 153 umgreifen nach dem Zusammensetzen des Flanschanschlussteils 101 und des Flanschanschlussteils 103 die Einsetzkante 121 des Flanschanschlussteils 103. Die Verstärkungshaken 153 übertragen eine Zugkraft von dem Anschlussstutzen 137 über die Einsetzkante 121 auf das Flanschanschlussteil 103. Die Verstärkungshaken 153 verursachen insbesondere bei erhöhten Systemdrücken von größer als 2,5bar oder bei Verwendung von nichtmetallischen Bauteilwerkstoffen, wie beispielsweise Kunststoffen, eine weitere Bauteilstabilität.

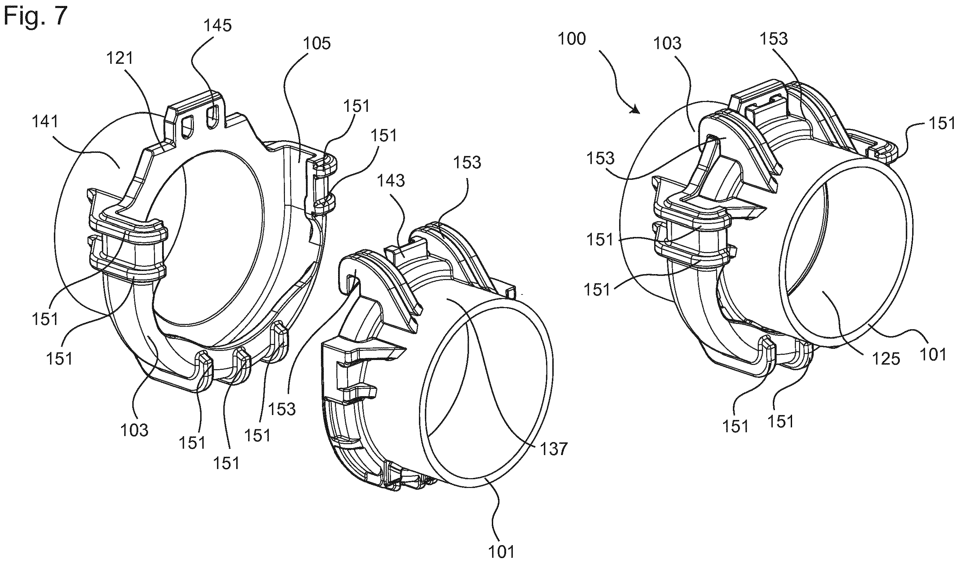

Fig. 7 zeigt mehrere Ansichten eines weiteren Flanschanschlusssystems 100. Das erste Flanschanschlussteil 101 weist mehrere Verstärkungshaken 153 zum Umgreifen der Einsatzkante 121 des zweiten Flanschanschlussteils 103 auf. Das zweite Flanschanschlussteil 103 umfasst mehrere Verstärkungsrippen 151 zum umlaufenden Verstärken der Aufnahme 105 an der Außenseite.

Durch die Flanschverbindungen werden die Funktionen Halten und Dichten unter hohem Drücken, speziell für Anwendungen in Ladeluftsysteme, lediglich durch das seitliche Aufschieben erzielt. Ein Zusatzschritt zur Erzielung der Haltekräfte oder Dichtkräfte ist hierbei nicht notwendig. Durch das Flanschanschlusssystem 100 wird ein spezielles Dichtungskonzept oder -System für eine einschiebbare Stutzenanbindung realisiert.

Außerdem ist ein Einbau bei begrenzten Bauräumen in allen Längenvarianten möglich. Mehre Anbindungen können im unmittelbarer Nähe zueinander verwirklicht werden. Da zur Montage keine axiale Aufschubbewegung erforderlich ist, kann die Flanschverbindung auch nachträglich montiert werden.

Mit dem Flanschanschlusssystem kann eine seitlich einschiebbare Flanschverbindung bei kurzen Verbindungsstrecken von beispielsweise 70 - 150 mm und eingeschränkten Bauräumen zukünftiger Motorengenerationen umgesetzt werden, beispielsweise für eine Anbindung einer Ladeluftleitung, ohne dass ein axiales Aufstecken oder Aufschieben von Teilen erforderlich ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Flanschanschlusssystem
- 101: Flanschanschlussteil
- 103: Flanschanschlussteil
- 105: Aufnahme
- 107: Formdichtung
- 109-1: Keilabschnitt
- 109-2: Keilabschnitt
- 109-3: Keilabschnitt
- 111: Dichtring
- 113: Einpressring
- 115: Halterippen
- 117-1: Rastmittel
- 117-2: Rastmittel
- 121: Einsatzkante
- 123: Vertiefung
- 125: Flanschöffnung
- 127-1: Rastarm
- 127-2: Rastarm
- 129: U-förmige Aussparung
- 131: Halteabschnitt
- 133: Halteabschnitt
- 135: Auflagefläche
- 137: Anschlussstutzen
- 139: Rastausnehmungen
- 141: Anschlussstutzen
- 143: Rastarm
- 145: Rastöffnung
- 147: Rastnase
- 149: Vorsprung
- 151: Verstärkungsrippe
- 153: Verstärkungshaken

## Patentansprüche

1. Flanschanschlusssystem (100) zum Herstellen einer Flanschverbindung für ein Fluid in einem Kraftfahrzeug, mit:
einem ersten Flanschanschlussteil (101);
einem zweiten Flanschanschlussteil (103) mit einer Aufnahme (105) zum seitlichen Einschieben des ersten Flanschanschlussteils (101);
einer Formdichtung (107) zum Abdichten der Flanschverbindung zwischen dem ersten Flanschanschlussteil (101) und dem zweiten Flanschanschlussteil (103), wobei die Formdichtung (107) einen Einpressring (113) zum Einpressen in das erste Flanschanschlussteil (101) umfasst, wobei der Einpressring (113) Halterippen (115) zum Halten eines Dichtrings (111) umfasst, und wobei die Halterippen (115) an beiden Rändern auf der Innenseite des Einpressrings (113) angeordnet sind; und
einem Keilabschnitt (109) zum Komprimieren der Formdichtung (107) beim Einschieben des ersten Flanschanschlussteils (101) in die Aufnahme (105) des zweiten Flanschanschlussteils (103).

2. Flanschanschlusssystem (100) nach Anspruch 1, wobei der Keilabschnitt (109) in dem ersten Flanschanschlussteil (101) oder dem zweiten Flanschanschlussteil (103) gebildet ist.

3. Flanschanschlusssystem (100) nach einem der vorangehenden Ansprüche, wobei drei Keilabschnitte (109-1, 109-2, 109-3) um eine Flanschöffnung (125) herum angeordnet sind.

4. Flanschanschlusssystem (100) nach Anspruch 3, wobei die drei Keilabschnitte (109-1, 109-2, 109-3) jeweils in einem Winkel von 120° zueinander angeordnet sind.

5. Flanschanschlusssystem (100) nach einem der vorangehenden Ansprüche, wobei die Aufnahme (105) im Querschnitt zumindest halbkreisförmig um die Flanschöffnung (125) umläuft.

6. Flanschanschlusssystem (100) nach einem der vorangehenden Ansprüche, wobei das zweite Flanschanschlussteil (103) eine Einsatzkante (121) mit einer Vertiefung (123) zum Einführen der Formdichtung (107) aufweist.

7. Flanschanschlusssystem (100) nach einem der vorangehenden Ansprüche, wobei die Formdichtung (107) einen im Querschnitt klammer- oder c-förmigen Dichtring (111) umfasst.

8. Flanschanschlusssystem (100) nach einem der vorangehenden Ansprüche, wobei das erste Flanschanschlussteil (101) einen oder mehrere Verstärkungshaken (153) zum Umgreifen einer Einsatzkante (121) des zweiten Flanschanschlussteils (103) aufweist.

9. Flanschanschlusssystem (100) nach einem der vorangehenden Ansprüche, wobei das zweite Flanschanschlussteil (103) eine oder mehrere Verstärkungsrippen (151) zum umlaufenden Verstärken der Aufnahme (105) an einer Außenseite umfasst.

10. Flanschanschlusssystem (100) nach einem der vorangehenden Ansprüche, wobei das erste Flanschanschlussteil (101) ein erstes Rastmittel (117-1) zum Einrasten in einer Seite der Aufnahme (105) und ein zweites Rastmittel (117-2) zum Einrasten in einer gegenüberliegenden Seite der Aufnahme (105) umfasst.

11. Flanschanschlusssystem (100) nach Anspruch 10, wobei sich zwischen dem ersten Rastmittel (117-1) und dem zweiten Rastmittel (117-2) ein Bügel (119) zum Lösen der Rastverbindung erstreckt.

## Claims

1. Flange connection system (100) for producing a flange connection for a fluid in a motor vehicle, comprising:
a first flange connection part (101);
a second flange connection part (103) with a receptacle (105) for laterally inserting the first flange connection part (101);
a moulded seal (107) for sealing the flange connection between the first flange connection part (101) and the second flange connection part (103), wherein the moulded seal (107) comprises a press-in ring (113) for pressing in the first flange connection part (101), wherein the press-in ring (113) comprises holding ribs (115) for holding a sealing ring (111), and wherein the holding ribs (115) are arranged at both edges on the inner side of the press-in ring (113); and
a wedge section (109) for compressing the moulded seal (107) during insertion of the first flange connection part (101) in the receptacle (105) of the second flange connection part (103).

2. Flange connection system (100) according to claim 1, wherein the wedge section (109) is formed in the first flange connection part (101) or the second flange connection part (103).

3. Flange connection system (100) according to any one of the preceding claims, wherein three wedge sections (109-1, 109-2, 109-3) are arranged around a flange opening (125).

4. Flange connection system (100) according to claim 3, wherein the three wedge sections (109-1, 109-2, 109-3) are each arranged at an angle of 120° to one another.

5. Flange connection system (100) according to any one of the preceding claims, wherein the receptacle (105) extends at least in a semicircle around the flange opening (125) in cross-section.

6. Flange connection system (100) according to any one of the preceding claims, wherein the second flange connection part (103) comprises an insert edge (121) with a recess (123) for inserting the moulded seal (107).

7. Flange connection system (100) according to any one of the preceding claims, wherein the moulded seal (107) comprises a sealing ring (111) with a clamp shape or a C-shape in cross-section.

8. Flange connection system (100) according to any one of the preceding claims, wherein the first flange connection part (101) comprises one or more reinforcing hooks (153) for embracing an insert edge (121) of the second flange connection part (103).

9. Flange connection system (100) according to any one of the preceding claims, wherein the second flange connection part (103) comprises one or more reinforcing ribs (151) for reinforcing the receptacle (105) circumferentially on an outer side.

10. Flange connection system (100) according to any one of the preceding claims, wherein the first flange connection part (101) comprises a first locking means (117-1) for locking in a side of the receptacle (105) and a second locking means (117-2) for locking in an opposite side of the receptacle (105).

11. Flange connection system (100) according to claim 10, wherein a bow (119) extends between the first locking means (117-1) and the second locking means (117-2) for releasing the locking connection.

## Revendications

1. Système de connexion de brides (100) pour fabriquer une connexion de brides pour un fluide dans un véhicule automobile, comportant:
une première partie de connexion de brides (101);
une deuxième partie de connexion de brides (103) ayant un logement (105) pour l'insertion latérale de la première partie de connexion de brides (101);
une étanchéité moulée (107) pour rendre étanche la connexion de brides entre la première partie de connexion de brides (101) et la deuxième partie de connexion de brides (103), dans lequel l'étanchéité moulée (107) comporte un anneau de pressage (113) pour presser dans la première partie de connexion de brides (101), dans lequel l'anneau de pressage (113) comporte des nervures de maintien (115) pour maintenir un anneau d'étanchéité (111) et dans lequel les nervures de maintien (115) sont disposées sur les deux bords sur le côté intérieur de l'anneau de pressage (113); et
une partie clavetée (109) pour comprimer l'étanchéité moulée (107) lors de l'insertion de la première partie de connexion de brides (101) dans le logement (105) de la deuxième partie de connexion de brides (103).

2. Système de connexion de brides (100) selon la revendication 1, dans lequel la partie clavetée (109) est formée dans la première partie de connexion de brides (101) ou dans la deuxième partie de connexion de brides (103).

3. Système de connexion de brides (100) selon l'une des revendications précédentes, dans lequel trois parties clavetées (109-1, 109-2, 109-3) sont disposées autour d'une ouverture de bride (125).

4. Système de connexion de brides (100) selon la revendication 3, dans lequel les trois parties clavetées (109-1, 109-2, 109-3) sont respectivement disposées de manière à former un angle de 120° l'une par rapport à l'autre.

5. Système de connexion de brides (100) selon l'une des revendications précédentes, dans lequel le logement (105) s'enroule autour de l'ouverture de bride (125) en section transversale au moins de manière semi-circulaire.

6. Système de connexion de brides (100) selon l'une des revendications précédentes, dans lequel la deuxième partie de connexion de brides (103) comporte un bord d'insertion (121) ayant une cavité (123) pour insérer l'étanchéité moulée (107).

7. Système de connexion de brides (100) selon l'une des revendications précédentes, dans lequel l'étanchéité moulée (107) comporte un anneau d'étanchéité (111) ayant une section transversale en forme d'agrafe ou en forme de c.

8. Système de connexion de brides (100) selon l'une des revendications précédentes, dans lequel la première partie de connexion de brides (101) comporte un ou plusieurs crochets de renforcement (153) pour entourer un bord d'insertion (121) de la deuxième partie de connexion de brides (103).

9. Système de connexion de brides (100) selon l'une des revendications précédentes, dans lequel la deuxième partie de connexion de brides (103) comporte une ou plusieurs nervures de renforcement (151) pour renforcer le logement (105) circulairement sur un côté extérieur.

10. Système de connexion de brides (100) selon l'une des revendications précédentes, dans lequel la première partie de connexion de brides (101) comporte un premier moyen d'encliquetage (117-1) pour l'encliquetage dans un côté du logement (105) et un deuxième moyen d'encliquetage (117-2) pour l'encliquetage dans un côté opposé du logement (105).

11. Système de connexion de brides (100) selon la revendication 10, dans lequel entre le premier moyen d'encliquetage (117-1) et le deuxième moyen d'encliquetage (117-2) s'étend un étrier pour débloquer la connexion d'encliquetage.
